# EUROPEAN PATENT SPECIFICATION

(11) **EP 0 989 700 B1**
(45) Date of publication and mention of the grant of the patent: **29.03.2006**
(21) Application number: 99306693.5
(22) Date of filing: 23.08.1999
(51) Int. Cl.: H04L 12/24, H04L 29/08, H04M 3/56, H04M 7/00

(54) **Network presence indicator for communications management**
Netzanwesenheitsindikator für Kommunikationsverwaltung
Indicateur de présence de réseau pour gestion de communications

(30) Priority: 21.08.1998 US 137688; 21.08.1998 US 137687
(43) Date of publication of application: 29.03.2000
(60) Divisional application: 04104937.0
(73) Proprietor: Nortel Networks Limited, St.Laurent, Quebec H4S 2A9 (CA)
(72) Inventor: Brisebois, Michel A., Wakefield, Quebec (CA); Ryan, Desmond J., Ottawa, Ontario (CA); French-St. George, Marilyn, Alcove, Quebec JOX 1AO (CA); Mahan, Laura, Kanata, Ontario (CA); Johnson, John I., Kinburn, Ontario (CA); Roberts, Jobe LW, Wakefield, Quebec JOX 3GO (CA)
(74) Representative: Loven, Keith James

(56) References cited:
- EP-A- 0 626 635
- WO-A-98/26540
- US-A- 5 610 915
- US-A- 5 711 187
- US-A- 5 796 393

## Description

### I. Background of the Invention

Telephone users currently have a relatively simple network access mechanism. To make a call, they lift the receiver, hear a dial-tone, and dial the number. To answer a call when they hear the telephone ring, they pick up the receiver and start talking. Telephone users do not need to know the data transmission path, the type of receiving device, other than the number, or the "called party location." In addition, the network is always active and available, even without power.

Computer users on the other hand, have "launch-application" mechanisms to access a network. They also generally need significant knowledge to configure a terminal device to access the network and to configure a data file to meet a receiving device's configuration. When receiving communications, notification is usually application-specific, and either lies buried below other open applications or becomes intrusive by capturing the computer display and denying access to other applications.

The telephony industry has made significant progress in developing and simplifying call management services, such as call waiting, calling line identification, conferencing, etc. For example, many of these features currently offer a degree of personalization. Once again in the computing industry, similar features are generally application-specific. Most conferencing, file sharing and E-mail applications, for example, still require an appropriate application to be open for them to work.

Other fundamental conflicts exist between telephony-based and computer-based models of communication management. In the telephony model, call management features are provided remotely by subscription or locally by peripherals (*e.g*., answering machines and fax routers). The telephony network also supports notification of convergent incoming calls (spontaneous call waiting identification, SCWID), and allows users to manage potential interruptions (deluxe spontaneous call waiting identification, DSCWID).

In the computing model, call management features are provided by device-resident local applications that may or may not be open while the user is operating a terminal device for something other than networked interactions. Conflicting incoming communications become messages directed to "in-boxes," and with the advent of IP-phones, synchronous interruptions will become a serious computing problem.

PCT International Application WO98/26540, Whistle Communications Corporation, published 18 June 1998, describes various services within a computer system which are automatically set up as users are added to the system through a directory service. WO98/26540 refers to an Internet access device for connecting to the Internet through an Internet Service Provider. This access device has status lights indicating its status,which includes WANactivity information. It provides to a system administrator device a graphical user interface, e.g. a web page, comprising, in a status window, the status of the computer system, the status of a connection to the Internet and the corresponding up time.

There is, therefore, a need for telephony-like user interfaces for computer-based applications and for interfaces that provide the users with current network information. Additional goals and advantages will be set forth in part in the description which follows, and in part will be obvious from the description, or may be learned by practice of the invention.

### II. Summary of the Invention

According to one aspect of the present invention, there is provided a communication device coupled to a network through a network service provider, comprising: a user interface; and a processor controlling the user interface, the processor including status presentation means for continually presenting on the user interface a network status indicator representing network status information, and a network interface communicating with the network service provider to receive updates of network status information; characterised by update means automatically controlling properties of the network status indicator responsive to the updates of network status information.

According to another aspect of the present invention, there is provided a network allowing user interaction comprising: a network service provider for providing network access; and a communication device including: a visual display device; and a processor controlling the visual display device, the processor including: status display means for continually displaying on the device a network status icon indicating the network status information, the network status icon containing segments organizing information about different groups; a network interface communicating with the network service provider to receive updates of network status information; characterised by update means automatically controlling properties of the network status icon responsive to the received updates of network status information.

A method consistent with this invention displays an indication of network status on a communication device coupled to a network through a network service provider. The method comprises the steps of: presenting on a user interface a network status indicator representing network status information; communicating with the network service provider to receive updates of network status information; and automatically controlling properties of the present indicator according to the received updates of network status information.

According to further aspects of the invention, a computer program according to claim 19 and a computer readable medium according to claim 20 are provided.

Various embodiments are defined by the dependent claims.

In an operational mode, the communication device (which may be a computer system but is typically a processor-controlled device, such as a cellular telephone) may execute application programs, with the step of presenting the network status indicator including the substep of ensuring that the network status icon is displayed on the device during the operational mode regardless of the image displayed.

The following features may be combined as appropriate with one another or actioned independently to provide, in combination with the features of claim 15, embodiments of the method of the invention.
- The step of communicating with the network service provider may also include the substep of receiving information regarding the ability of the network to permit communication, and wherein the step of controlling properties of the presented indicator includes the substep of adjusting the display of the network status icon to indicate the ability of the network to permit communication.
- The step of communicating with the network service provider may also include the substep of receiving information regarding the bandwidth of the network available to the computer system, and wherein the step of controlling properties of the presented indicator includes the substep of adjusting the display of the network status icon to indicate the bandwidth of the network available to the computer system.The step of communicating with the network service provider may also include the substep of receiving information regarding a specific network activity, and wherein the step of controlling properties of the presented indicator includes the substep of adjusting the display of the network status icon to indicate the specific network activity.
- The step of communicating with the network service provider may also include the substep of changing the shape of the network status icon.
- The step of communicating with the network service provider may also include the substep of changing a color of the network status icon.

Both the foregoing general description and the following detailed description are exemplary and explanatory only, and do not restrict the invention claimed. The accompanying drawings, which are incorporated in and constitute a part of this specification, illustrate some system and methods consistent with the invention and, together with the description, explain the principles of the invention.

### III. BRIEF DESCRIPTION OF THE DRAWINGS

In the drawings:
Figure 1 is a diagram showing an example of a system consistent with this invention;
Figure 2 is a network status icon consistent with this invention;
Figure 3 is a diagram showing the network status icon in Figure 2 with a cellular telephone;
Figure 4 is a diagram of a mouse with a physical network status button consistent with this invention;
Figures 5, 6, and 7 show examples of a communications environment consistent with this invention; and
Figures 8, 9, 10, 11, and 12 show examples of a mini-environment consistent with this invention.

### IV. Description of the Preferred Embodiment

### A. Overview

The drawings show one system consistent with this invention as a distributed application that integrates telephony-based and computer-based communication management mechanisms with a single, easy-to-use interface. While the user is connected to a communications network, the system represents the status of the network with a status indicator, such as an icon. The indicator can be divided into segments each corresponding to a separate communications area environment, such as for business concerns, for a personal concerns, etc. When divided in this way, each segment of the network status indicator represents the status of the network (e.g., the presence of a message), for the corresponding area.

A user can also use the indicator to manage communications in the corresponding environment. For example, by selecting a segment, the user could access an environment and send or receive messages, create E-mail groups, or perform other tasks. The system also enables a user to employ prioritization mechanisms and communicate in a variety of ways, such as visually or audibly.

### B. Network Components

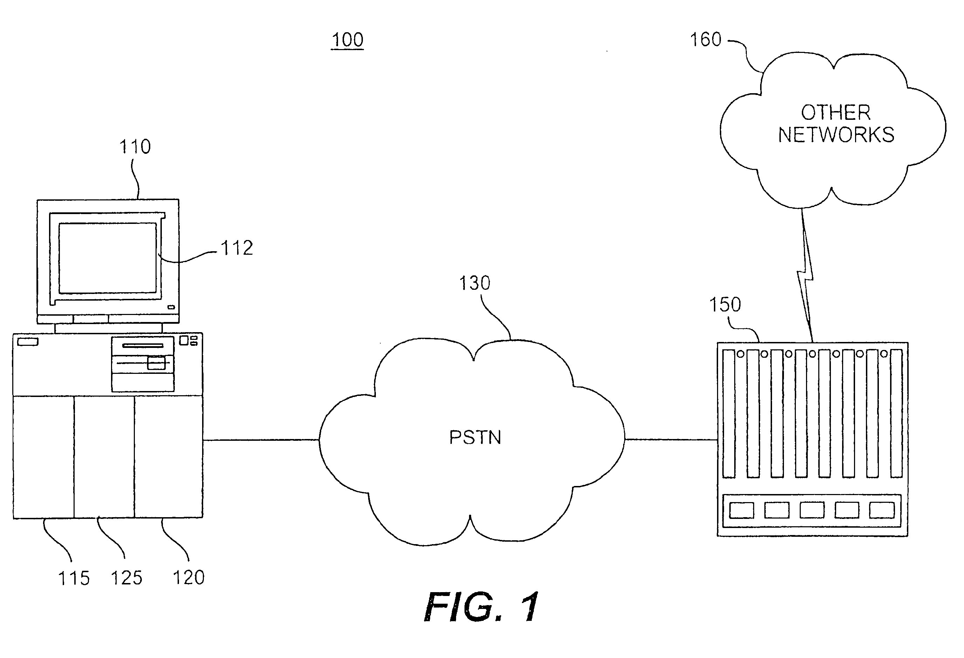

Figure 1 shows an example of a network using a system consistent with this invention. In network 100, a computer system 110 includes driver software 115 that receives the network information and presents it as a network status indicator, such as by displaying it as an icon or producing an auditory equivalent called an "earcon." Driver software 115 communicates with interface software 120 that receives regular information packets from a network service provider, as well as special messages indicating specific communications, such as E-mail messages. Communications manager 125, which is coupled to driver software 115 and interface software 120, manages the actual communications functions, such as message handling, port configuration, and protocol management.

In one embodiment consistent with the present invention, interface software 120 could be implemented as an application or extension to an operating system to continuously run in the background making calls over a network to a server, in essence, waiting for a communication event such as an E-mail, voice or video call. Driver software 115 can also continuously run in the background monitoring CPU (central processing unit) tasks including applications running in the background or foreground and user input through the keyboard buffer such as mouse clicks, movements, and keystrokes. By tightly integrating communications manager 125 into the operating system of a given platform through driver software 115, communications manager 125 can request to send events to the user's screen, e.g., animation or sound, or be given priority and placed at the forefront if it receives a high priority communication event from interface software 120, for example, an important incoming video call.

To implement these features in computer system 110 in many of existing operating systems, driver software 115 continuously makes a call to the CPU to be placed in a queue and push communications manager 125 to the foreground when necessary. Driver software 115 preferably runs on a preemptive multitasking environment where it can make requests to the operating system for CPU processing priority. While driver software 115, interface software 120, and communications manager 125 are preferably written in Java or C++, they can be written in any computer language best suited for a given platform.

Computer system 110 is coupled through Public Switched Telephone Network (PSTN) 130 to a Network Service Provider (NSP) 150, such as an Internet service provider. NSP 150 allows access to a network 160, which could be the Internet.

Preferably, NSP 150 continually *(e.g.,* once per second) sends a small string or packet of data to computer system 110. Interface software 120 interprets the data to determine whether access to network 160 is possible. Interface software 120 responds to NSP 150 to acknowfedge receipt, and passes the information to driver software 115 to indicate the network status. For example, if network 160 becomes bogged down, NSP 150 sends a message to computer 110 to reroute through PSTN 130. The data from NSP 150 could also indicate other features, such as available bandwidth or the presence of messages, or context information as explained below.

### C. Software and Operation

### 1. Network status icon

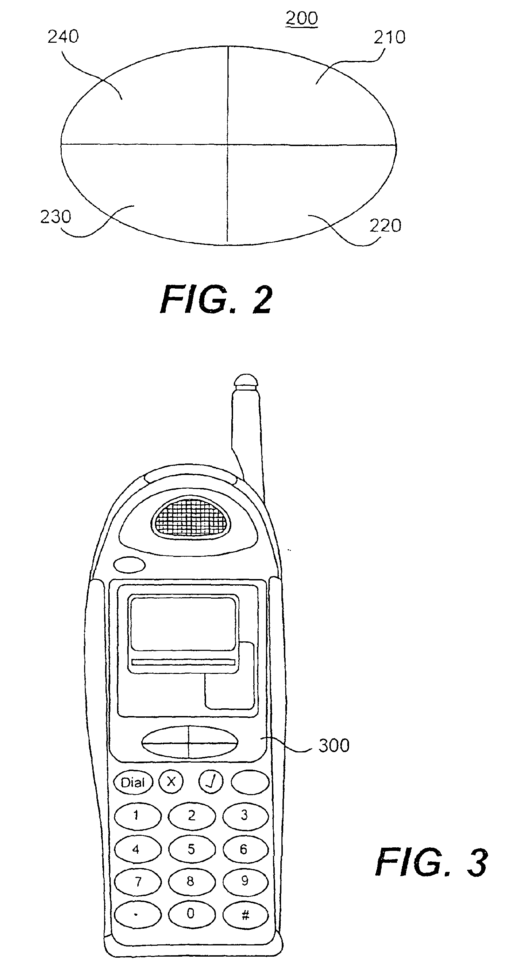

Based on the received information, a monitor 112 of computer 110 would display an icon, such as 200 in Figure 2, or present some other type of indicator, such as an earcon, to indicate network availability. Systems and methods consistent with this invention ideally represent the status indicators in contextually relevant sensory modalities. For example, if a user is watching television, the system may represent the indicator as a pop-up display or an auditory signal.

In devices with visual displays, software for generating the displays, such as driver software 115, places graphical icon 200 on the topmost layer of all graphical elements, *e.g.,* on the desktop above all other folders, documents and icons. This ensures that icon 200 will always be displayed when the network is being used.

The icon's presence preferably indicates that the network is up and running, and its shape or some other characteristic, such as size or color, preferably indicates the available bandwidth. For example, if the broadband network connection is available, icon 200 may take the shape of a circle, but if the broadband network connection is unavailable, icon 200's shape may become an ellipse, as shown in Figure 2. Equivalent changes would be used for other types and status indicators.

Driver software 115 also makes icon 200 transparent when the user performs non-network tasks, such as opening local documents. When the user is performing network tasks, the driver software preferably moves icon 200 to parts of the display that are not in use. One way of doing this would be for driver software 115 to communicate with a windows manager (not shown) to learn which windows are currently active.

In addition, icon 200 preferably animates in the presence of incoming communication notifications. Such animation can include pulsing, changing colors, generating an auditory signal, or some other kind of desired behavior. Auditory icons can animate by representing spatial movement using stereo signals.

In Figure 1, driver software 1 15 would recover the packets and data from NSP 150 and adjust the display of the icon 200 accordingly. As explained below, some functions for icon 200 require the use of communication manager 125.

Icon 200, or similar indicators consistent with this invention, can be used with any networked product, such as televisions, telephones, facsimile machines, refrigerators, or burglar/fire alarms. Preferably, all such devices will have a microprocessor and sensory input/output mechanism appropriate to that device. Figure 3 shows the use of a network icon with a cellular telephone.

### 2. Other manifestations

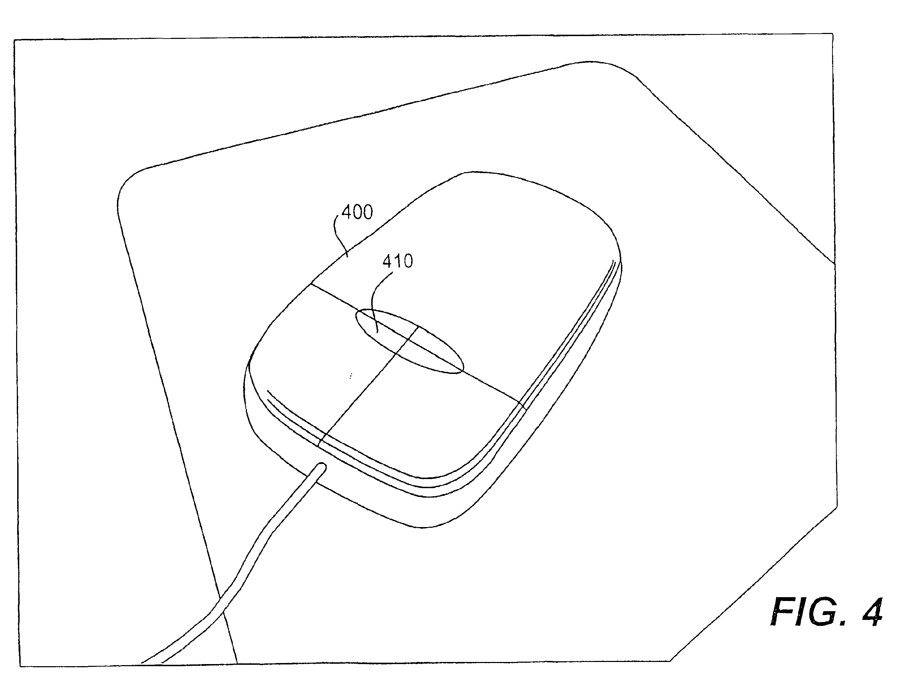

A physical network status button could also be present on a standard input/output device such as a mouse, keyboard and tablet. Figure 4 shows a mouse 400 with such a button 410.

The external button would provide a quick and natural response to incoming notifications and initiation of outgoing communications because access to the network is provided through the tools that the user is likely to be using with the host device. When the network presence button is activated, the network presence icon automatically appears under the cursor so the user does not have to navigate to the icon and open it.

Access to the network presence feature may also be achieved through voice commands. In such case, voice recognition software would take the place of a cursor and keyboard.

Furthermore, personal communication management (PCM) devices, such as those that are worn or carried, could have an appropriate network presence status indicator. PCM devices can also function as adjuncts to future computer-like devices, thus providing wireless remote access to personal communication management environments without interrupting work resident on the computer.

Different interaction methodologies will depend on the input/output interaction mechanisms of the host device. In new products, custom peripherals would ideally optimize access to the capabilities of the network status icon. These peripherals will likely be multi modal, *i.e.,* use multiple sensory mechanisms. Also, existing input/output mechanisms could enable software hooks to the network status functions in legacy products.

### 3. Segments

The network status icon 200, or any other such icons, can also identify the status of and allow access to different user areas or communications environments, as explained above. To do this, the icon is preferably divided into segments. For example, icon 200 in Figure 2 includes segments 210, 220, 230, and 240 that are differentiated by colors or other indicia. Each segment provides access to a corresponding communications environment that can represent a particular personal relationship class. For example, selecting segment 210 might access business contacts, family, or personal contacts. Icon 200 thus preferably represents users' communication environments in ways that are personally relevant, such as socially relevant groupings, such as family, work, clubs, etc.

Icon 200 may also illustrate organizational structures other than ones based on personal relationships. For example, by switching from a relationships view to a networked devices view, a user may be able to view the array of communication devices available within the vicinity.

As explained above with regard to the entire icon, incoming communications to an environment will animate the respective segments using graphical or auditory (or both) methods. The type of animation or other methods of indication can be whatever desired to indicate the presence of such a communication.

To access the network, a user activates one of the segments, such as by touching it or directing some software mechanism to activate it. Upon activation, the segment will expand to reveal a communications environment with an underlying organizational structure for that segment. For example, if a user wishes to access a business segment, the underlying structure might be a corporate organizational chart.

### D. Communication Environments

### 1. Related to segments

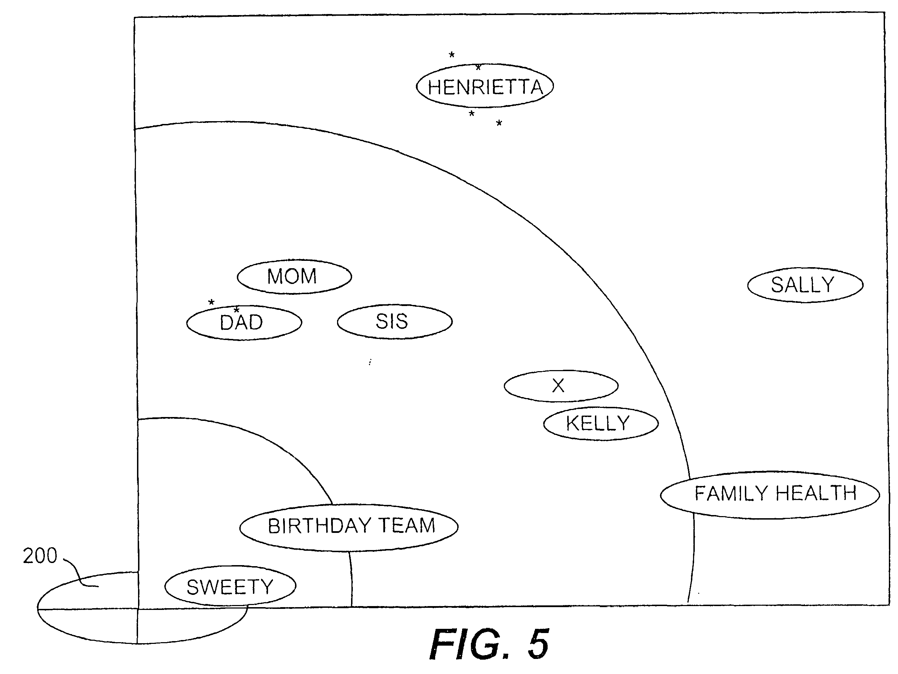

Figures 5, 6, and 7 show examples of a communications environment corresponding to one of the segments of icon 200, such as segment 220. Figures 5, 6, and 7 demonstrate how the communications environments expand from the segments of icon 200 after being selected.

The communications environments preferably contain several objects, some of which are organized into groups. The objects preferably represent persons or parties with whom a user wants to communicate, but the objects could represent any entity relevant to the user or communications environment. Although shown as visual elements, the objects could also be represented by any other appropriate sensory input, such as by an auditory indication, with audible indications also used to supplement or substitute visual information concerning an apparent location within the icon 200 or segment.

The groups preferably represent organizations of objects that share some interest. For example, one group can represent members of a user's family, a bridge group, or people with whom the user shares season tickets.

Grouping is one way to use spatial relationships to represent an environment. Another way is to locate more important or more frequently accessed groups or objects near an "origin," which is at the bottom left corner in Figures 5, 6, and 7. That corner also corresponds to the center of icon 200.

A user can then use the communication environments to send, receive, or broadcast messages. Figures 5, 6, and 7 demonstrate one of the environments.

Figure 5 shows a "family" quadrant where objects are clustered into groups, such as the birthday team. The stars around the "Henrietta" object indicate a message from "Henrietta." Clicking on that object opens the message.

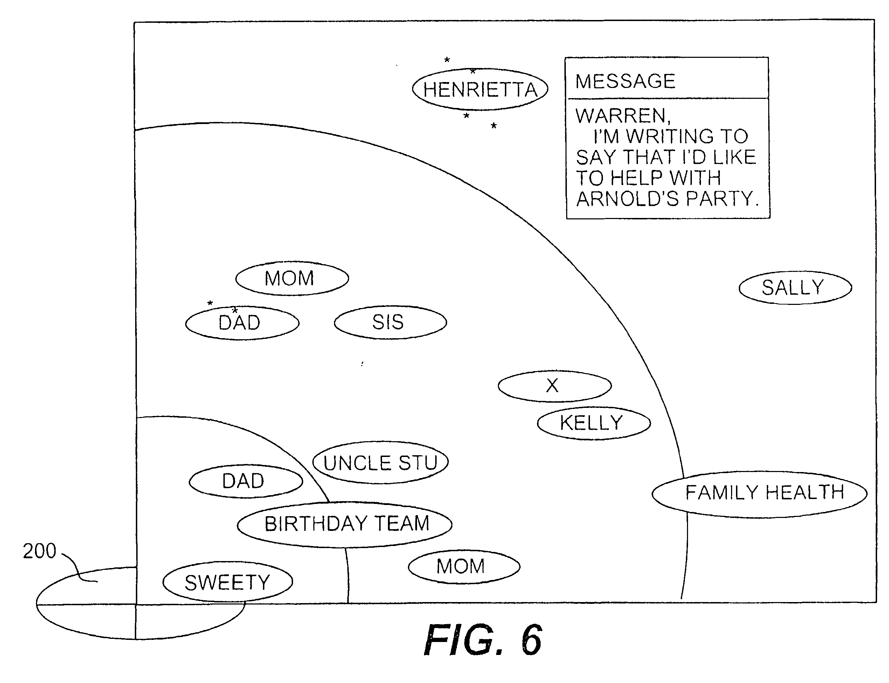

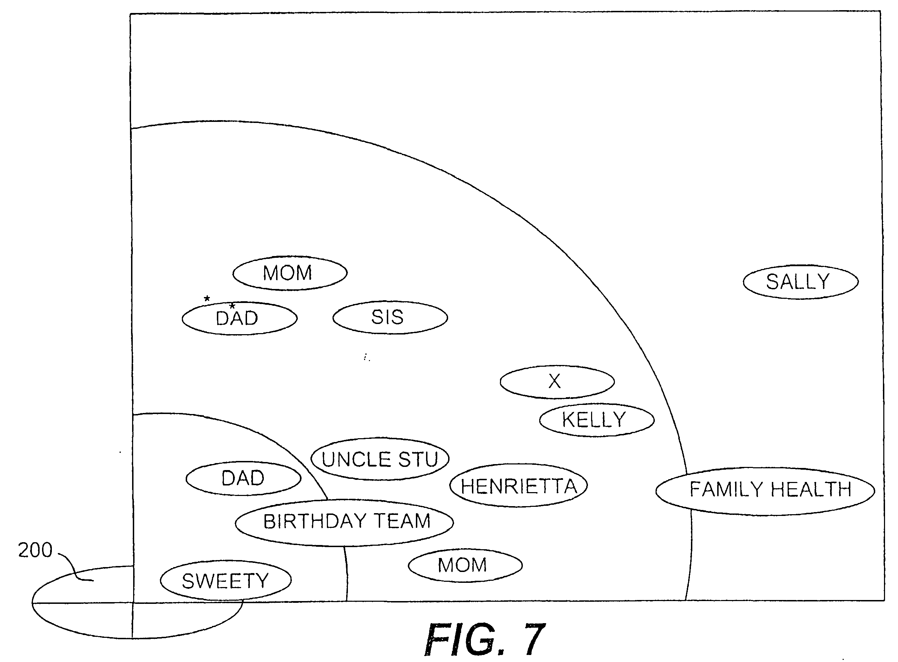

As shown in Figure 6, which represents the communication environment after opening the message from Henrietta, the message indicates a desire to help with a special project. The user could then drag the Henrietta object to the "birthday team" cluster in the lower left-hand corner and automatically add her to that cluster, as shown in Figure 7. To send a message to the members of the "birthday team," one could select that team and then compose and send the team the message.

Users can also place objects representing one person into more than one cluster. For example, Figure 6 shows the "Dad" object in a nuclear family cluster and in a "birthday team" cluster, and communications can occur within the context of his role as a family member or his role as a member of the "birthday team."

Preferably, incoming communication events will automatically cluster with similar previous events. Clustering can be based on context information acquired by the network, or input by the caller. In such a case, communications manager 125 would use context information from the network to determine which cluster pertains to an event, such as a message. Information about network context information appears in European Patent Application No 98 310270.8.

Control of the functions in each environment is under the control of communications manager 125 and driver software 115. Together they control the appearance and operation of the communications environment.

Auditory animation could invoke earcons representing the respective segment. Earcons and graphical animations will convey incoming communication status information such as communication priority, conference connection, etc. In addition, spatial location within a segment will preferably reflect the priority or frequency of communication assigned to that individual. Spatial location may also reflect the spatial organization of the relationships within icon 200 by appearing to come from the left or right. By controlling the time delays in a stereo speaker system, similar types of movement can be represented auditorially as well.

Network status icon 200 can also be used with the communications environments to perform other tasks that currently require special software. For example, sending computer-created documents to another person currently requires the user to close the document and move the file to the receiving in-box, or attach the closed document to an E-mail notification. A user could instead select a segment, open an environment, and drag and drop a document page, or the whole document, onto an appropriate object and invoke the proper call management command within the environment. The commands, which could be represented by modem icons, facsimile icons, or telephone icons, indicate how a communication is to take place. Communication manager 125 would then implement the communication.

### 2. Mini-environments

In addition, third-party vendors, or users themselves, can create custom call management mini-environments that enable customized communicating options. Mini-environments allow vendors to customize communication channels for particular markets by creating custom graphical and auditory scenes, restricting communication channels (e.g., bandwidth, time-of day), or limiting the number of people that can be accessed through the environment. Customized billing may also be associated with these mini-environments.

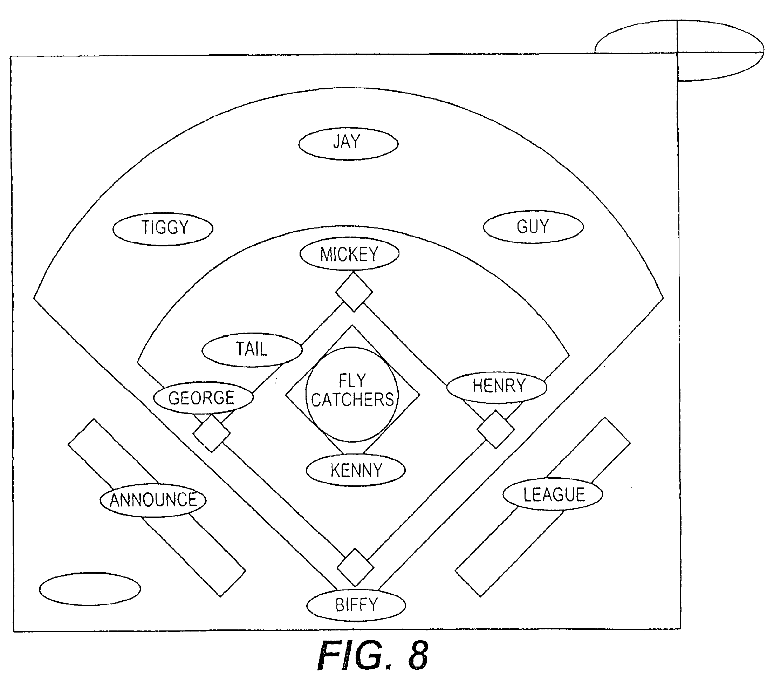

Figures 8, 9, 10, 11, and 12 also show examples of a mini-environment that a little league baseball organization could create for a coach. The graphical and auditory appearance of the mini-environment might look like a baseball diamond, and the mini-environment might reside in a user's recreational segment.

The mini-environment in Figures 8, 9, 10, 11, and 12 allows a coach to configure preferred communication channels (voice to some, E-mail to others, and fax to others), and then create and send a text or voice announcement to the players, relying on the network to make the appropriate media conversions to match the players' preferred communication channels. The mini-environment may also support reminder announcements.

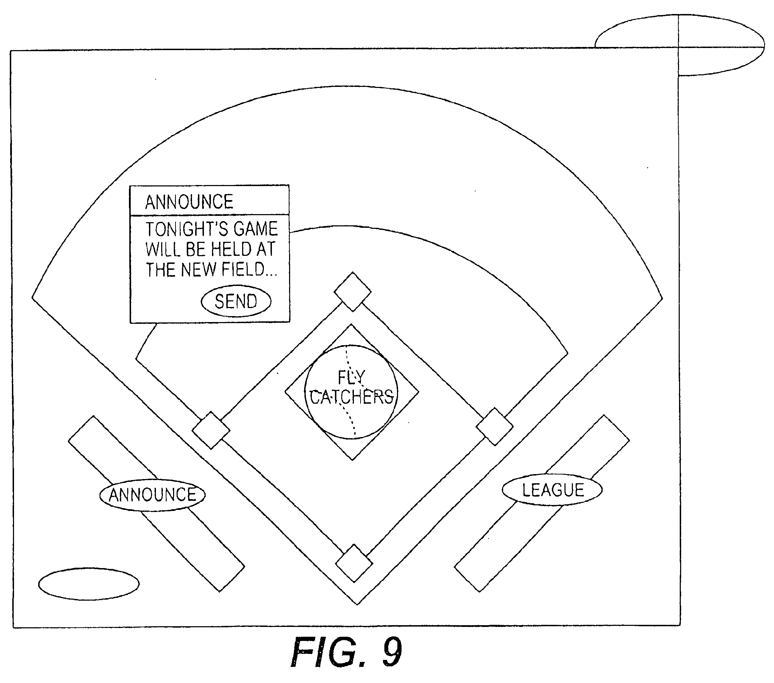

For example, Figure 8 shows the coach selecting the "announcement" object, allowing the coach to type a message as a text note, as shown in Figure 9, in this case reminding the players of the game. The message is sent as an "RSVP" message meaning that upon receipt, the players can automatically reply either "yes" or "no." Selecting "custom" in the message allows receipt of custom replies as part of the automatic reply.

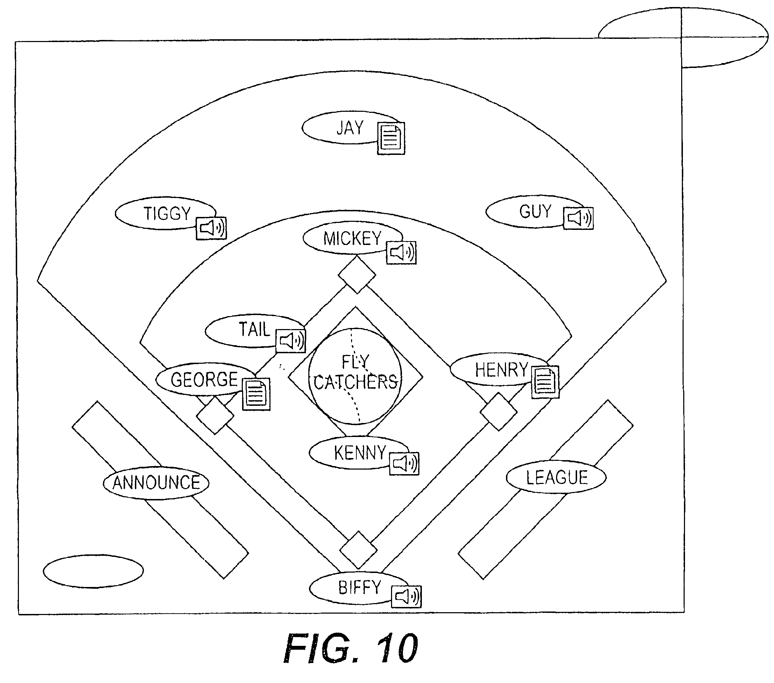

As Figure 10 shows, the text message is sent out to the players. Where players do not have access to text displays, the message is automatically converted to a voice message, shown by the speaker with the sound wave, and delivered telephonically. Conversely, a voice message could have been converted to text and delivered as an E-mail message to players with the document icon.

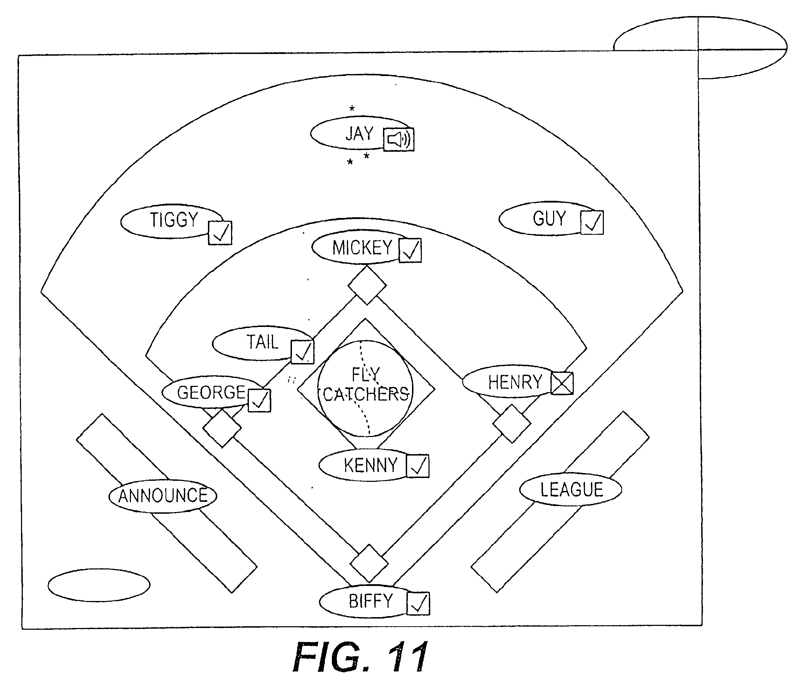

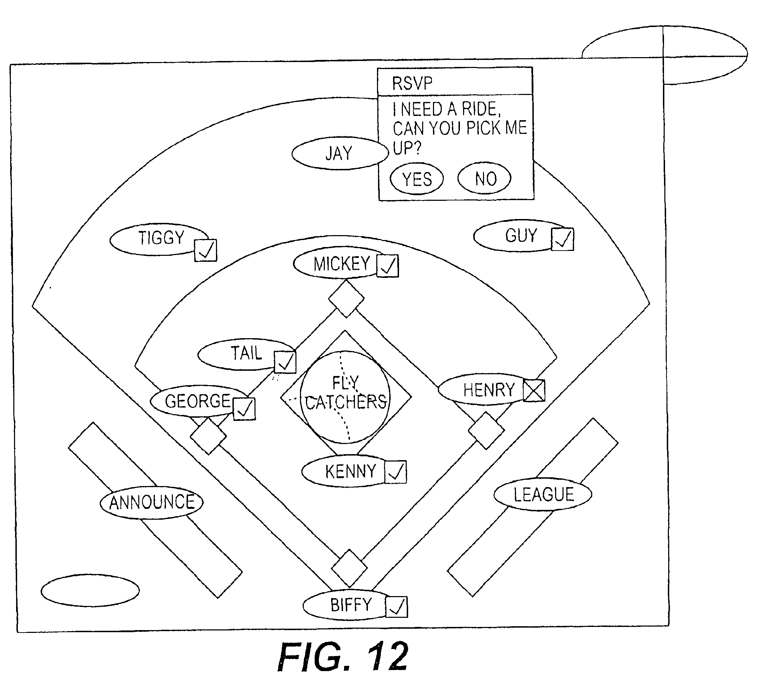

Figure 11 shows the receipt of the RSVP responses. Those with a white check can make the game, but one cannot, and his response is shown by a white x. One player, Jay, has responded with a voice message. As Figure 12 shows, the voice message asks the coach for a ride and is itself an RSVP message. This allows the coach to respond automatically with either "yes" or "no." voice message could have been converted to text and delivered as an E-mail message to players with the document icon.

Figure 11 shows the receipt of the RSVP responses. Those with a white check can make the game, but one cannot, and his response is shown by a white x. One player, Jay, has responded with a voice message. As Figure 12 shows, the voice message asks the coach for a ride and is itself an RSVP message. This allows the coach to respond automatically with either "yes" or "no."

### D. Conclusion

Use of network status indicators, such as icons or earcons, thus provide users with current network information in an easy-to-use form similar to that provided by telephony models. Furthermore, the status indicators along with the environments provide telephony-like user interfaces for computer-based applications and integrate communication management structures and mechanisms.

Those skilled in the art will appreciate that various modifications and variations can be made in systems and methods consistent with this invention without departing from the scope of the invention, which is defined by the claims.

## Claims

1. A communication device (110) coupled to a network (160) through a network service provider (150), comprising:
a user interface (112); and
a processor (125) controlling the user interface (112), the processor including status presentation means for continually presenting on the user interface (112) a network status indicator (200) representing network status information, and a network interface (120) communicating with the network service provider (150) to receive updates of network status information; **characterised by** update means automatically controlling properties of the network status indicator (200) responsive to the updates of network status information.

2. The communication device of claim 1, wherein the user interface (112) includes an audio device, and wherein the status presentation means includes means for producing an audio signal indicating status.

3. The communication device of claim 1 or claim 2, wherein the user interface (112) includes a visual display device, and wherein the status presentation means includes means for continually displaying an icon (200) on the device.

4. The communication device of claim 3 having an operational mode during which the communication device can execute application programs, wherein the processor (125) also includes: a device controller for controlling an image displayed on the device, and wherein the status presentation means further includes means, in communication with the device controller, for ensuring that the network status icon (200) is displayed on the device during the operational mode regardless of the image displayed.

5. The communication device of claim 3 or 4, wherein the network interface (120) includes means for receiving information regarding the ability of the network (160) to permit communication, and wherein the update means includes means for adjusting the display of the icon (200) to indicate the ability of network (160) to permit communication.

6. The communication device of claim, 3 4, or 5, wherein the network interface (120) includes means for receiving information regarding the bandwidth of the network available to the communication device, and wherein the update means includes means for adjusting the display of the icon (200) to reflect the bandwidth of the network available to the communication device.

7. The communication device of any one of claims 3 to 6, wherein the network interface (120) includes means for receiving information regarding a specific network activity, and wherein the update means includes means for adjusting the display of the icon (200) to indicate the specific network activity.

8. The communication device of any one of claims 3 to 7, wherein the update means includes means for changing the shape of the icon (200).

9. The communication device of any one of claims 3 to 8, wherein the update means includes means for changing the color of the icon (200).

10. The communication device of any preceding claim, wherein the network status indicator (200) contains segments (210, 220, 230, 240) organizing information about different groups.

11. The communication device of any one of claims 3 to 10, wherein the status presentation means includes means for displaying the icon (200) divided into different portions, each corresponding to a different group.

12. The communication device of claim 10 or 11, wherein the network interface (120) includes means for receiving updates of network status information for each of the groups.

13. The communication device of claim 10, 11 or 12 including means for continually displaying an icon (200), wherein the update means includes means for controlling properties of the different portions of the network status icon (200) according to the updates of network status information for each of the groups.

14. The communication device of any preceding claim, comprising a computer system.

15. A method for displaying an indication of network status on a communication device (110, 400) coupled to a network (160) through a network service provider (150), the method comprising the steps of:
presenting on a user interface (112) a network status indicator (200) representing network status information;
communicating with the network service provider (150) to receive updates of network status information; and
automatically controlling properties of the presented indicator (200) responsive to the received updates of network status information.

16. The method for displaying an indication of network status on a communication device according to claim 15, wherein the network status indicator (200) contains segments (210, 220, 230, 240) organizing information about different groups.

17. The method for displaying an indication of network status on a communication device according to claim 16, wherein the network status indicator (200) comprises an icon.

18. A network allowing user interaction comprising: a network service provider (150) for providing network access; and
a communication device (110) including:
a visual display device (112); and
a processor (125) controlling the visual display device, the processor including:
status display means for continually displaying on the device a network status icon (200) indicating the network status information, the network status icon (200) containing segments (210, 220, 230, 240) organizing information about different groups; and
a network interface (120) communicating with the network service provider to receive updates of network status information;
**characterised by** update means automatically controlling properties of the network status icon (200) responsive to the received updates of network status information.

19. A computer program to make a processor-controlled device perform the method according to one of claims 15, 16 or 17.

20. A computer readable medium embodying a computer program as claimed in claim 19.

21. The communication device of claim 1 further comprising:
an output device;
environment access means for allowing access to a communications environment in response to an input;
means for presenting objects in the communications environment on the output device in a context-relevant environment, the objects representing desired communication partners;
means for receiving a message from a sending one of the communication partners; and
means for changing, in the communications environment, the presentation of the objects corresponding to the sending communication partner in response to the receipt of a message from the corresponding communication partner.

## Patentansprüche

1. Kommunikationseinrichtung (110), die mit einem Netzwerk (160) über einen Netzwerk-Diensteanbieter (150) gekoppelt ist, mit:
einer Benutzer-Schnittstelle (112); und
einem Prozessor (125), der die Benutzer-Schnittstelle (112) steuert, wobei der Prozessor Status-Darstellungseinrichtungen zur kontinuierlichen Darstellung einer Netzwerk-Status-Anzeige (200), die die Netzwerk-Status-Information darstellt, auf der Benutzer-Schnittstelle (112) einschließt, und einer Netzwerk-Schnittstelle (120), die mit dem Netzwerk-Diensteanbieter (150) kommuniziert, um Aktualisierungen der Netzwerk-Status-Information zu empfangen, **gekennzeichnet durch** Aktualisierungseinrichtungen, die automatisch Eigenschaften der Netzwerk-Status-Anzeige als Antwort auf die Aktualisierungen der Netzwerk-Status-Information steuern.

2. Kommunikationseinrichtung nach Anspruch 1, bei der die Benutzer-Schnittstelle (112) ein Audio-Gerät einschließt, und bei der die Status-Darstellungseinrichtungen Einrichtungen zur Erzeugung eines Audio-Signals einschließen, das den Status anzeigt.

3. Kommunikationseinrichtung nach Anspruch 1 oder 2, bei der die Benutzer-Schnittstelle (112) eine visuelle Anzeigeeinrichtung einschließt, und bei der die Status-Darstellungseinrichtungen Einrichtungen zur kontinuierlichen Anzeige eines Piktogramms (200) auf der Einrichtung einschließen.

4. Kommunikationseinrichtung nach Anspruch 3, die eine Betriebsart aufweist, während der die Kommunikationseinrichtung Anwendungsprogramme ausführen kann, wobei der Prozessor (125) weiterhin Folgendes einschließt: eine Gerätesteuerung zur Steuerung eines Bildes, das auf dem Gerät angezeigt wird, wobei die Status-Darstellungseinrichtungen weiterhin Einrichtungen in Kommunikation mit der Gerätesteuerung einschließen, um sicherzustellen, dass das Netzwerk-Status-Piktogramm (200) auf der Anzeigevorrichtung während der Betriebsart unabhängig von dem dargestellten Bild angezeigt wird.

5. Kommunikationseinrichtung nach Anspruch 3 oder 4, bei der die Netzwerk-Schnittstelle (120) Einrichtungen zum Empfang von Informationen bezüglich der Verfügbarkeit des Netzwerkes (160) zur Ermöglichung einer Kommunikation einschließt, und bei der die Aktualisierungseinrichtungen Einrichtungen zur Einstellung der Anzeige des Piktogramms (200) zur Anzeige der Fähigkeit des Netzwerkes (160) zur Ermöglichung einer Kommunikation anzuzeigen.

6. Kommunikationseinrichtung nach Anspruch 3, 4, oder 5, bei der die Netzwerk-Schnittstelle (120) Einrichtungen zum Empfang von für die Kommunikationseinrichtung verfügbarer Bandbreite des Netzwerkes einschließt, und bei der die Aktualisierungseinrichtung Einrichtungen zur Einstellung der Anzeige des Piktogramms (200) einschließt, um die Bandbreite des Netzwerkes wiederzugeben, die für die Kommunikationseinrichtung verfügbar ist.

7. Kommunikationseinrichtung nach einem der Ansprüche 3-6, bei der die Netzwerk-Schnittstelle (120) Einrichtungen zum Empfang von Information bezüglich einer bestimmten Netzwerk-Aktivität einschließt, und bei der die Aktualisierungseinrichtung Einrichtungen zur Einstellung der Anzeige des Piktogramms (200) zur Anzeige der bestimmten Netzwerk-Aktivität einschließt.

8. Kommunikationseinrichtung nach einem der Ansprüche 3-7, bei der die Aktualisierungseinrichtung Einrichtungen zum Ändern der Form des Piktogramms (200) einschließt.

9. Kommunikationseinrichtung nach einem der Ansprüche 3-8, bei der die Aktualisierungseinrichtung Einrichtungen zur Änderung der Farbe des Piktogramms (200) einschließt.

10. Kommunikationseinrichtung nach einem der vorhergehenden Ansprüche, bei der die Netzwerk-Status-Anzeige (200) Segmente (210, 220, 230, 240) enthält, die information über unterschiedliche Gruppen organisieren.

11. Kommunikationseinrichtung nach einem der Ansprüche 3-10, bei der die Status-Darstellungseinrichtungen Einrichtungen zur Anzeige des Piktogramms (200) aufgeteilt in unterschiedliche Abschnitte einschließt, die jeweils einer anderen Gruppe entsprechen.

12. Kommunikationseinrichtung nach Anspruch 10 oder 11, bei der die Netzwerk-Schnittstelle (120) Einrichtungen zum Empfang von Aktualisierungen der Netzwerk-Status-Information für jede der Gruppen einschließt.

13. Kommunikationseinrichtung nach Anspruch 10, 11 oder 12, die Einrichtungen zu kontinuierlichen Anzeige eines Piktogramms (200) einschließt, wobei die Aktualisierungseinrichtung Einrichtungen zur Steuerung der Eigenschaften unterschiedlicher Abschnitte des Netzwerk-Status-Piktogramms (200) entsprechend den Aktualisierungen der Netzwerk-Status-Information für jede der Gruppen einschließt.

14. Kommunikationseinrichtung nach einem der vorhergehenden Ansprüche, die ein Computersystem umfasst.

15. Verfahren zur Darstellung einer Anzeige des Netzwerk-Status auf einer Kommunikationseinrichtung (110, 400), die mit einem Netzwerk (160) durch einen Netzwerk-Diensteanbieter (150) gekoppelt ist, wobei das Verfahren die folgenden Schritte umfasst:
Darbieten einer Netzwerk-Status-Anzeige (200), die die Netzwerk-Status-Information darstellt, auf einer Benutzer-Schnittstelle (112);
Kommunikation mit dem Netzwerk-Diensteanbieter (150) zum Empfang von Aktualisierungen der Netzwerk-Status-Information; und
automatisches Steuern der Eigenschaften der dargebotenen Anzeige (200) in Abhängigkeit von den empfangenen Aktualisierungen der Netzwerk-Status-Information.

16. Verfahren zur Darstellung einer Anzeige des Netzwerk-Status auf einer Kommunikationseinrichtung nach Anspruch 15, bei dem die Netzwerk-Status-Anzeige (200) Segmente (210, 220, 230, 240) enthält, die Information in unterschiedliche Gruppen organisieren.

17. Verfahren zur Darstellung einer Anzeige des Netzwerk-Status auf einer Kommunikationseinrichtung nach Anspruch 16, bei dem die Netzwerk-Status-Anzeige (200) ein Piktogramm umfasst.

18. Ein Netzwerk, das eine Benutzer-Wechselwirkung ermöglicht, mit: einem Netzwerk-Diensteanbieter (150) zur Bereitstellung eines Netzwerk-Zuganges; und
einer Kommunikationseinrichtung (110), die Folgendes einschließt:
eine visuelle Anzeigeeinrichtung (112); und
einen Prozessor (125), der die visuelle Anzeigeeinrichtung steuert, wobei der Prozessor Folgendes einschließt:
Status-Anzeigeeinrichtungen zur kontinuierlichen Anzeige eines Netzwerk-Status-Piktogramms (200), das die Netzwerk-Status-Information anzeigt, auf der Einrichtung, wobei das Netzwerk-Status-Piktogramm (200) Segmente (210, 220, 230, 240) enthält, die Information über unterschiedliche Gruppen organisieren; und
einer Netzwerk-Schnittstelle (120), die mit dem Netzwerk-Diensteanbieter kommuniziert, um Aktualisierungen der Netzwerk-Status-Information zu empfangen;
**gekennzeichnet durch** Aktualisierungseinrichtungen, die automatisch Eigenschaften des Netzwerk-Status-Piktogramms (200) als Antwort auf empfangene Aktualisierungen der Netzwerk-Status-Information steuern.

19. Computerprogramm zum Bewirken, dass eine prozessorgesteuerte Einrichtung das Verfahren nach einem der Ansprüche 15, 16 oder 17 ausführt.

20. Computerlesbares Medium, das ein Computerprogramm nach Anspruch 19 beinhaltet.

21. Kommunikationseinrichtung nach Anspruch 1, die weiterhin Folgendes umfasst:
eine Ausgabeeinrichtung;
Umgebungs-Zugangseinrichtungen zur Ermöglichung eines Zugangs an eine Kommunikations-Umgebung als Antwort auf eine Eingabe;
Einrichtungen zur Darbietung von Objekten in der Kommunikations- umgebung auf der Ausgabeeinrichtung in einer Kontext-relevanten Umgebung, wobei die Objekte gewünschte Kommunikationspartner darstellen;
Einrichtungen zum Empfang einer Mitteilung von einem Sendenden der Kommunikationspartner; und
Einrichtungen zur Änderung der Darbietung der Objekte in der Kommunikationsumgebung entsprechend dem sendenden Kommunikationspartner als Antwort auf den Empfang einer Mitteilung von dem entsprechenden Kommunikationspartner.

## Revendications

1. Dispositif de communication (110) couplé à un réseau (160) par l'intermédiaire d'un fournisseur de services de réseau (150), comprenant :
une interface utilisateur (112) ; et
un processeur (125) contrôlant l'interface utilisateur (112), le processeur comprenant un moyen de présentation d'état pour présenter continuellement sur l'interface utilisateur (112) un indicateur d'état de réseau (200) représentant une information d'état de réseau, et une interface réseau (120) communiquant avec le fournisseur de services de réseau (150) pour recevoir des mises à jour de l'information d'état de réseau ; **caractérisé par** un moyen de mise à jour contrôlant automatiquement des propriétés de l'indicateur d'état de réseau (200) en réponse aux mises à jour de l'information d'état de réseau.

2. Dispositif de communication selon la revendication 1, dans lequel l'interface utilisateur (112) comprend un dispositif audio, et dans lequel le moyen de présentation d'état comprend un moyen pour produire un signal audio indiquant l'état.

3. Dispositif de communication selon la revendication 1 ou la revendication 2, dans lequel l'interface utilisateur (112) comprend un dispositif d'affichage visuel, et dans lequel le moyen de présentation d'état comprend un moyen pour afficher continuellement une icône (200) sur le dispositif.

4. Dispositif de communication selon la revendication 3 ayant un mode opérationnel durant lequel le dispositif de communication peut exécuter des programmes d'application, dans lequel le processeur (125) comprend également : un contrôleur de dispositif pour contrôler une image affichée sur le dispositif, et dans lequel le moyen de présentation d'état comprend en outre un moyen, en communication avec le contrôleur de dispositif, pour assurer que l'icône d'état de réseau (200) soit affichée sur le dispositif durant le mode opérationnel indépendamment de l'image affichée.

5. Dispositif de communication selon la revendication 3 ou 4, dans lequel l'interface réseau (120) comprend un moyen pour recevoir une information concernant la capacité du réseau (160) à permettre la communication, et dans lequel le moyen de mise à jour comprend un moyen pour ajuster l'affichage de l'icône (200) pour indiquer la capacité du réseau (160) à permettre la communication.

6. Dispositif de communication selon la revendication 3, 4, ou 5, dans lequel l'interface réseau (120) comprend un moyen pour recevoir une information concernant la largeur de bande du réseau disponible pour le dispositif de communication, et dans lequel le moyen de mise à jour comprend un moyen pour ajuster l'affichage de l'icône (200) pour refléter la largeur de bande du réseau disponible pour le dispositif de communication.

7. Dispositif de communication selon l'une quelconque des revendications 3 à 6, dans lequel l'interface réseau (120) comprend un moyen pour recevoir une information concernant une activité de réseau spécifique, et dans lequel le moyen de mise à jour comprend un moyen pour ajuster l'affichage de l'icône (200) pour indiquer l'activité de réseau spécifique.

8. Dispositif de communication selon l'une quelconque des revendications 3 à 7, dans lequel le moyen de mise à jour comprend un moyen pour changer la forme de l'icône (200).

9. Dispositif de communication selon l'une quelconque des revendications 3 à 8, dans lequel le moyen de mise à jour comprend un moyen pour changer la couleur de l'icône (200) .

10. Dispositif de communication selon l'une quelconque des revendications précédentes, dans lequel l'indicateur d'état de réseau (200) contient des segments (210, 220, 230, 240) organisant des informations au sujet de groupes différents.

11. Dispositif de communication selon l'une quelconque des revendications 3 à 10, dans lequel le moyen de présentation d'état comprend un moyen pour afficher l'icône (200) divisée en parties différentes, chacune correspondant à un groupe différent.

12. Dispositif de communication selon la revendication 10 ou 11, dans lequel l'interface réseau (120) comprend un moyen pour recevoir des mises à jour de l'information d'état de réseau pour chacun des groupes.

13. Dispositif de communication selon la revendication 10, 11 ou 12 comprenant un moyen pour afficher continuellement une icône (200), dans lequel le moyen de mise à jour comprend un moyen pour contrôler des propriétés des différentes parties de l'icône d'état de réseau (200) selon les mises à jour de l'information d'état de réseau pour chacun des groupes.

14. Dispositif de communication selon l'une quelconque des revendications précédentes, comprenant un système informatique.

15. Procédé pour afficher une indication d'état de réseau sur un dispositif de communication (110, 400) couplé à un réseau (160) par l'intermédiaire d'un fournisseur de services de réseau (150), le procédé comprenant les étapes consistant à :
présenter sur une interface utilisateur (112) un indicateur d'état de réseau (200) représentant une information d'état de réseau ;
communiquer avec le fournisseur de services de réseau (150) pour recevoir des mises à jour de l'information d'état de réseau ; et
contrôler automatiquement des propriétés de l'indicateur présenté (200) en réponse aux mises à jour reçues de l'information d'état de réseau.

16. Procédé pour afficher une indication d'état de réseau sur un dispositif de communication selon la revendication 15, dans lequel l'indicateur d'état de réseau (200) contient des segments (210, 220, 230, 240) organisant des informations au sujet de groupes différents.

17. Procédé pour afficher une indication d'état de réseau sur un dispositif de communication selon la revendication 16, dans lequel l'indicateur d'état de réseau (200) comprend une icône.

18. Réseau permettant une interaction utilisateur comprenant : un fournisseur de services de réseau (150) pour fournir un accès au réseau ; et
un dispositif de communication (110) comprenant :
un dispositif d'affichage visuel (112) ; et
un processeur (125) contrôlant le dispositif d'affichage visuel, le processeur comprenant :
un moyen d'affichage d'état pour afficher continuellement sur le dispositif une icône d'état de réseau (200) indiquant l'information d'état de réseau, l'icône d'état de réseau (200) contenant des segments (210, 220, 230, 240) organisant des informations au sujet de groupes différents ; et
une interface réseau (120) communiquant avec le fournisseur de services de réseau pour recevoir des mises à jour de l'information d'état de réseau ;
**caractérisé par** le moyen de mise à jour contrôlant automatiquement des propriétés de l'icône d'état de réseau (200) en réponse aux mises à jour reçues de l'information d'état de réseau.

19. Programme informatique pour faire qu'un dispositif contrôlé par processeur effectue le procédé selon une des revendications 15, 16 ou 17.

20. Support lisible par ordinateur incorporant un programme informatique tel que revendiqué dans la revendication 19.

21. Dispositif de communication selon la revendication 1 comprenant en outre :
un dispositif de sortie ;
un moyen d'accès à un environnement pour permettre l'accès à un environnement de communications en réponse à une entrée ;
un moyen pour présenter des objets dans l'environnement de communications sur le dispositif de sortie dans un environnement approprié au contexte, les objets représentant des partenaires de communication souhaités ;
un moyen pour recevoir un message d'un partenaire de communication émetteur des partenaires de communication ; et
un moyen pour changer, dans l'environnement de communications, la présentation des objets correspondant au partenaire de communication émetteur en réponse à la réception d'un message du partenaire de communication correspondant.
